# EUROPÄISCHE PATENTSCHRIFT

(11) **EP 0 831 264 B1**
(45) Veröffentlichungstag und Bekanntmachung des Hinweises auf die Patenterteilung: **28.06.2000**
(21) Anmeldenummer: 97115313.5
(22) Anmeldetag: 04.09.1997
(51) Int. Cl.: F16L 3/10

(54) **Rohrschelle**
Pipe clamp
Collier de serrage

(30) Priorität: 20.09.1996 DE 19638598
(43) Veröffentlichungstag der Anmeldung: 25.03.1998
(73) Patentinhaber: Sikla GmbH & Co. KG, 78595 Hausen o.V. (DE)
(72) Erfinder:
(74) Vertreter: Schmitt, Hans, Dipl.-Ing.

(56) Entgegenhaltungen:
- EP-A- 0 462 052
- DE-C- 4 431 692
- DE-U- 9 214 700
- DE-U- 29 519 000

## Beschreibung

Die Erfindung betrifft eine Rohrschelle mit einem etwa ringförmigem Schellenkörper, der zumindest eine, mittels einer Spannschraube verschließbare Schellenöffnung hat, welche durch an gegenüberliegenden Schellenenden nach außen vorstehende und mit dem Schellenkörper im wesentlichen starr verbundene erste und zweite Befestigungsflansche begrenzt ist, wobei die Spannschraube an den Befestigungsflanschen vorgesehene Befestigungsöffnungen durchsetzt und mit ihrem dem Schraubenkopf abgewandten freien Endbereich in einem Sicherungsglied verstellbar gehalten ist, welches Sicherungsglied am Schellenkörper im Bereich des ersten Befestigungsflansches auf seiner dem zweiten Befestigungsflansch abgewandten Seite um eine etwa parallel zur Schellenlängsachse verlaufende Achse gegen eine Rückstellkraft verschwenkbar gehalten ist und wobei der erste Befestigungsflansch als Auflage für das schwenkbare Sicherungsglied dient.

Eine Rohrschelle der eingangs erwähnten Art ist bereits aus den Dokumenten EP 0 188 649 A1 und DE 295 19000 U bekannt. Die von Dokument E P 0 188 649 A1 vorbekannte Rohrschelle hat einen Schellenkörper, der als ein etwa kreisförmig gebogenes einteiliges Schellenband mit zwei nach außen abgebogenen Befestigungsflanschen ausgebildet ist. Diese Befestigungsflansche begrenzen eine Schellenöffnung, durch welche ein Rohr in das Innere des Schellenkörpers seitlich eingelegt werden kann. Nach dem Einlegen des Rohres lassen sich die Befestigungsflansche mittels einer Spannschraube zusammenziehen, welche gleichzeitig auch die Schellenöffnung schließt.

Während der als Widerlager für den Schraubenkopf der Spannschraube dienende Befestigungsflansch einen randseitig offenen Befestigungsschlitz hat, wird eine am gegenüberliegenden Befestigungsflansch vorgesehene Befestigungsöffnung von der Spannschraube mit Spiel durchsetzt. Diese Spannschraube ist in die mit einem Innengewinde ausgestattete Halteöffnung eines Sicherungsgliedes eingeschraubt, welches am Schellenkörper schwenkbar gelagert ist. Das Sicherungsglied weist dazu einen abgewinkelten T-förmigen Ansatz auf, der eine Durchstecköffnung des Schellenkörpers durchsetzt und dessen T-Quersteg auf der Schellenkörper-Innenseite als Schwenkachse für das Sicherungsglied dient.

In geschlossenem Zustand des Schellenkörpers liegt der T-förmige Ansatz weitgehend vollflächig an der Innenseite des Schellenkörpers an. Die Schellenkörper-Innenseite ist von einer gummielastischen Einlage überdeckt, die eine radial einwirkende Kraft auf den Ansatz ausübt, welche das laschenförmige Sicherungsglied stets in eine zum benachbarten Befestigungsflansch parallele Lage zu bringen sucht. Wird dagegen die aus der Spannschraube und dem Sicherungsglied bestehende Einheit zum Öffnen der Rohrschelle nach außen verschwenkt, so ist dies nur entgegen der Federkraft der Einlage möglich. Die Federkraft der Einlage bewirkt anschließend, daß die aus der Spannschraube und dem Sicherungsglied bestehende Einheit in eine Lage zurückgeschwenkt wird, bei der das Sicherungsglied annähernd parallel zu dem ihm als Auflage dienenden Befestigungsflansch verläuft und die Spannschraube in den offenen Befestigungsschlitz des gegenüberliegenden Befestigungsflansches eingreift, wo sie endgültig angezogen und die Rohrschelle dadurch gespannt werden kann.

Die vorbekannte Rohrschelle gemäß EP 0 188 649 A1 erlaubt somit die gegebenenfalls auch einhändige Vormontage eines Rohres im Schellenkörper. Nachteilig ist jedoch, daß die ordnungsgemäße Funktion dieser vorbekannten Rohrschelle die Verwendung einer gummielastischen Einlage voraussetzt, die jedoch eventuell nicht immer benötigt wird.

Man kennt auch bereits eine Rohrschelle, die an ihrem bandförmigen Schellenkörper zwei, eine Schellenöffnung begrenzende Schellenenden aufweist, von denen nur ein Schellenende als nach außen abgebogener Befestigungsflansch mit einem randseitig offenen Befestigungsschlitz für den Eingriff einer Spannschraube ausgebildet ist, während das gegenüberliegende Schellenende von einem daran schwenkbar gehaltenen, bügelartigen Verbindungskörper durchsetzt wird (vgl. DE 44 31 692 C1). Zwischen der Umlenkstelle des bügelartigen Verbindungskörpers und dem umgebogenen Ende des benachbarten Schellenendes ist ein federelastisches Rückstellglied vorgesehen. An dem am Schellenkörper verschwenkbar gelagerten Verbindungskörper ist eine Spannschraube verstellbar gehalten, die in den randseitig offenen Befestigungsschlitz des gegenüberliegenden Befestigungsflansches eingreifen kann. Die aus dem bügelartigem Verbindungskörper und der Spannschraube bestehende Einheit läßt sich entgegen der Kraft des federelastischen Rückstellgliedes außer Eingriff mit dem am gegenüberliegenden Befestigungsflansch vorgesehenen Befestigungsschlitzbringen, um anschließend ohne Aufbringen weiterer Handkräfte praktisch automatisch in den offenen Befestigungsschlitz zurückzuschwenken.

Die aus DE 44 31 **6**92 C1 vorbekannte Rohrschelle vermittelt jedoch den Eindruck, höheren Belastungen auf den Schellenkörper nicht standhalten zu können, weil nämlich der Verbindungskörper bei geschlossener Rohrschelle lediglich auf dem stirnseitigen Rand des benachbarten umgebogenen Schellenendes aufliegt. Darüber hinaus wird die Herstellung der vorbekannten Rohrschelle durch das Einfügen des Rückstellgliedes zwischen den Verbindungskörper und das benachbarte Schellenende nicht unwesentlich erschwert.

Es besteht daher die Aufgabe, eine kostengünstig herstellbare und belastbare Rohrschelle der eingangs erwähnten Art zu schaffen, die möglichst vielseitig einsetzbar ist.

Die erfindungsgemäße Lösung dieser Aufgabe besteht insbesondere darin, daß die Rohrschelle eine doppelarmige Federklammer aufweist, welche mit einem ersten Federarm eine Durchstecköffnung des Schellenkörpers durchsetzt und die von der Innenseite des Körpers aus derart das Sicherungsglied und den ersten Befestigungsflansch umgreift, daß sie mit ihrem zweiten Federarm an diesem Befestigungsflansch anliegt und mit ihrem ersten Federarm die Sicherungslasche federnd beaufschlagt.

Die zumindest eine Schellenöffnung der erfindungsgemäßen Rohrschelle wird durch zwei flach nach außen vorstehende Befestigungsflansche begrenzt, die mit dem Schellenkörper im wesentlichen starr verbunden sind. Die Befestigungsflansche können mit einer Spannschraube zusammengezogen werden, die an den Befestigungsflanschen vorgesehene Befestigungsöffnungen durchsetzt. Diese Spannschraube ist an einem Sicherungsglied verstellbar gehalten, welches Sicherungsglied im Bereich eines ersten Befestigungsflansches am Schellenkörper verschwenkbar gelagert ist. Im geschlossenen Zustand der erfindungsgemäßen Rohrschelle dient dem Sicherungsglied der benachbarte erste Befestigungsflansch als Auflage. Die erfindungsgemäße Rohrschelle zeichnet sich somit durch eine vergleichsweise hohe Belastbarkeit aus.

Die aus dem Sicherungsglied und der Spannschraube bestehende Einheit kann gegen die Kraft einer Federklammer derart verschwenkt werden, daß die mittels der Spannschraube zwischen den Befestigungsflanschen bewirkte Verbindung lösbar ist. Dabei ist die doppelarmige Federklammer mit einem ersten Federarm durch eine Durchstecköffnung des Schellenkörpers hindurchgeführt und umgreift von der Innenseite des Schellenkörpers aus die Sicherungslasche und den ersten Befestigungsflansch derart, daß sie mit ihrem zweiten Federarm an diesem Befestigungsflansch anliegt und mit ihrem ersten Federarm die Sicherungslasche federnd beaufschlagt. Eine zusätzliche gummielastische Einlage, die weiterhin eventuell zur Schalldämmung zweckdienlich sein kann, ist somit als Rückstellkraft für das Rückstellglied entbehrlich. Die erfindungsgemäße Rohrschelle kann dadurch auch ohne gummielastische Einlage vorteilhaft eingesetzt werden, wodurch ihre vielseitige Einsetzbarkeit zusätzlich begünstigt wird. Da das Aufschieben der Federklammer mit keinem wesentlichen Aufwand verbunden ist, ist die erfindungsgemäße Rohrschelle auch einfach und vergleichsweise kostengünstig herstellbar.

Die hohe Belastbarkeit der erfindungsgemäßen Rohrschelle und der feste Halt der Stellschraube am Sicherungsglied wird begünstigt, wenn am Sicherungsglied vorzugsweise auf seiner dem zweiten Befestigungsflansch abgewandten Seite ein Halteansatz mit Schraubenöffnung vorgesehen ist, in der die Spannschraube verstellbar gehalten ist.

Vorteilhaft ist es, wenn das Sicherungsglied mittels der Federklammer vorzugsweise lösbar am Schellenkörper gehalten ist. Dabei sieht eine besonders einfache und bevorzugte Ausführungsform gemäß der Erfindung vor, daß die Federklammer zumindest an ihrem ersten Federarm eine Halteöffnung hat, welche den Halteansatz des Sicherungsgliedes vorzugsweise formschlüssig umgreift. Diese formschlüssige Verbindung zwischen dem Sicherungsglied und der Federklammer begünstigt die einfache Montage der erfindungsgemäßen Rohrschelle.

Um nach dem Schließen der erfindungsgemäßen Rohrschelle die Schellenenden mittels der Spannschraube möglichst fest zusammenziehen zu können, ist es vorteilhaft, wenn am Sicherungsglied ein Innengewinde oder dergleichen Gewindeprofilierung vorgesehen ist, in welchem die Spannschraube verstellbar gehalten ist und wenn die Gewindeprofilierung vorzugsweise in der Schraubenöffnung am Halteansatz des Sicherungsgliedes vorgesehen ist.

Zusätzlich zu oder statt einer formschlüssigen Verbindung zwischen dem Sicherungsglied und der Federklammer kann es auch zweckmäßig sein, wenn das Sicherungsglied von der Innenseite des Schellenkörpers aus bis zu einer Querschnittserweiterung des Sicherungsgliedes in die Durchstecköffnung einführbar ist. Da bei einer solchen Ausführungsform die erfindungsgemäße Rohrschelle auch ohne Federklammer verwendbar ist, wird die vielseitige Einsetzbarkeit und die kostengünstige Herstellung der erfindungsgemäßen Rohrschelle noch zusätzlich begünstigt. Ein Wegrutschen des Sicherungsgliedes beim Festziehen der Spannschraube wird dadurch wirkungsvoll vermieden.

Dabei ist gemäß einer bevorzugten Weiterbildung an den beiden Längsseiten des Sicherungsgliedes jeweils ein quer zur Einführrichtung des Sicherungsgliedes vorstehender Anschlag- und Gelenkzapfen als Querschnittserweiterung vorgesehen.

Um möglichst den gesamten lichten Querschnitt des Schellenkörpers zur Aufnahme eines Rohres einsetzen zu können, ohne daß einzelne Befestigungsmittel der erfindungsgemäßen Rohrschelle in das Schellenkörper-Innere vorstehen, ist es vorteilhaft, wenn das Sicherungsglied an seiner dem Schelleninneren zugewandten Schmalseite eine Ausnehmung zur vorzugsweise formangepaßten Aufnahme eines benachbarten Teilbereiches der Federklammer hat. Somit steht die auf das Sicherungsglied aufgeschobene Federklammer nicht über dessen dem Schelleninneren zugewandte Schmalseite vor.

Um die Schraubenachse der am Sicherungsglied gehaltenen Spannschraube in einer etwa rechtwinklig zur Schellen-Längsachse angeordneten Schwenkebene sicher zu führen, ist es vorteilhaft, wenn die Durchstecköffnung des ersten und/oder des zweiten Befestigungsflansches als Langloch ausgebildet ist, welches in etwa radialer Richtung des Schellenkörpers orientiert ist. Die von der Spannschraube durchsetzten Langlöcher führen die Spannschraube während der Schwenkbewegung des Sicherungsgliedes in einer etwa radial zum Schellenkörper angeordneten Schwenkebene.

Bei der erfindungsgemäßen Rohrschelle können die an der Schellenöffnung gegenüberliegenden Befestigungsflansche miteinander verbunden und anschließend zusammengezogen werden, indem beim Zusammenführen dieser Befestigungsflansche entweder das freie Schaftende der am zweiten Befestigungsflansch gehaltenen Spannschraube mittels dem Sicherungsglied oder der Schraubenkopf der am Sicherungsglied verschwenkbar gehaltenen Spannschraube mittels dem zweiten Befestigungsflansch gefangen wird.

Eine besonders einfache und kostengünstig herstellbare Ausführungsform gemäß der Erfindung sieht dabei vor, daß die als Langloch ausgebildete Durchstecköffnung des zweiten Befestigungsflansches zum Erfassen des Schraubenschaftes der Spannschraube auf der der Innenseite des Schellenkörpers abgewandten Schmalseite des Befestigungsflansches randseitig offen ausgebildet ist. Während das Sicherungsglied in geschlossenem Zustand der Rohrschelle am ersten Befestigungsflansch anliegt, kann durch Verschwenken der aus dem Sicherungsglied sowie der Spannschraube bestehenden Einheit gegen die Rückstellkraft der Federklammer die Spannschraube am randseitig offenen Langloch des zweiten Befestigungsflansches außer Eingriff gebracht werden. Werden die an den gegenüberliegenden Schellenenden vorgesehenen Befestigungflansche anschließend wieder in Richtung zueinander bewegt, gleitet der Schraubenkopf am zweiten Befestigungsflansch nach außen zur randseitigen Öffnung des entsprechenden Langloches, um anschließend nach Überwinden des stirnseitigen Randes des zweiten Befestigungsflansches durch die Rückstellkraft der Federklammer mit dem zweiten Befestigungsflansch erneut in Eingriff gebracht zu werden. In dieser Vormontagestellung können die Befestigungsflansche durch Festziehen der Spannschraube in das Sicherungsglied zusammengezogen und ein Rohr somit fest eingespannt werden.

Ein einhändiges Verschließen der erfindungsgemäßen Rohrschelle durch Zusammenführen der gegenüberliegenden Befestigungsflansche wird erleichtert, wenn der freie Endbereich des zweiten Befestigungsflansches auf seiner dem ersten Befestigungsflansch zugewandten Seite eine in Richtung zur randseitigen Öffnung des Langloches nach außen orientierte Auflaufschräge für den Schraubenkopf aufweist. Diese Auflaufschräge kann beispielsweise durch eine endseitige Abflachung des zweiten Befestigungsflansches gebildet sein.

Eine bevorzugte Ausführungsform sieht jedoch vor, daß der freie Endbereich des zweiten Befestigungsflansches in die dem ersten Befestigungsflansch abgewandte Richtung abgewinkelt ist und daß die Biegekante dieses abgewinkelten Endbereiches vorzugsweise etwa mittig durch das Langloch verläuft. Bei geschlossenem Zustand der Rohrschelle ist die Spannschraube somit sicher in dem dem Schellenkörper zugewandten Teilbereich des Langloches angeordnet, wobei der benachbarte abgewinkelte freie Endbereich des zweiten Befestigungsflansches die Spannschraube an einem Herausrutschen aus dem Langloch hindert. Gleichzeitig bildet dieser abgewinkelte freie Teilbereich des Befestigungsflansches eine Auflaufschräge, an welcher der Schraubenkopf während dem Zusammendrücken der Befestigungsflansche in das Langloch gleiten kann.

Damit insbesondere beim einhändigen Schließen der erfindungsgemäßen Rohrschelle die Spannschraube möglichst einfach in das am zweiten Befestigungsflansch vorgesehene Langloch gleiten kann, ist es vorteilhaft, wenn dieses Langloch sich in Richtung zu seiner randseitigen Öffnung zu einem Einführtrichter für den Schraubenschaft erweitert.

Eine besonders einfache und vorteilhafte Ausführungsform gemäß der Erfindung sieht vor, daß die Federklammer aus einem federelastischem Material, insbesondere aus Federstahl oder Kunststoff hergestellt ist und/oder eine zumindest in einem Teilbereich federelastische Formgebung aufweist. Die Federklammer kann dazu beispielsweise an ihrem ersten Federarm eine Querschnittsverengung oder dergleichen Formgebung aufweisen, die eine Federwirkung beim Verschwenken des Sicherungsgliedes bewirkt.

Eine störungsfreie Funktion der erfindungsgemäßen Rohrschelle wird begünstigt, wenn das Sicherungsglied in der zumindest bereichsweise formangepaßten Durchstecköffnung verschwenkbar geführt ist. Somit wird auch das Sicherungsglied während des Verschwenkens in einer etwa radial zur Schellen-Längsachse angeordneten Schwenkebene geführt.

Durch Zusammenführen der an der Schellenöffnung gegenüberliegenden Befestigungflansche erlaubt die erfindungsgemäße Rohrschelle eine auch einhändig zu bewerkstelligende Vormontage. Um dem Anwender das Erreichen der Vormontagestellung deutlich hörbar anzuzeigen, sieht eine bevorzugte Ausführungsform gemäß der Erfindung vor, daß der der randseitigen Öffnung abgewandte Umfangsrand des Langloches die Rückschwenkbewegung der mit der Sicherungslasche verschwenkbaren Spannschraube begrenzt. Sobald also die Spannschraube in das am zweiten Befestigungsflansch vorgesehene Langloch einschnappt, schnellt die Spannschraube durch die Rückstellkraft der Federklammer gegen den der randseitigen Öffnung abgewandten Umfangsrand des Langloches, was als deutliches Klacken zu hören ist.

Eine bevorzugte Ausführungsform gemäß der Erfindung sieht vor, daß an der Schellenkörper-Innenseite eine vorzugsweise durch eine insbesondere umlaufende Sicke gebildete Ausnehmung vorgesehen ist und daß die Anschlag- und Gelenkzapfen des Sicherungsgliedes sowie gegebenenfalls der benachbarte Teilbereich der Federklammer im wesentlichen innerhalb dieser Ausnehmung angeordnet sind. Insbesondere eine als Sicke ausgebildete Ausnehmung erhöht nicht nur die Belastbarkeit des bandförmigen Schellenkörpers, vielmehr kann in dieser Ausnehmung auch das Schwenklager des Sicherungsgliedes angeordnet werden, ohne daß dieses Sicherungsglied oder der benachbarte Teilbereich der Federklammer wesentlich in das Schellenkörper-Innere vorstehen würden.

Es zeigt in zum Teil nicht maßstäblicher Darstellung:
- Fig. 1: eine Rohrschelle im Bereich ihrer Schellenöffnung, die durch an gegenüberliegenden Schellenenden nach außen vorstehende Befestigungsflansche begrenzt ist, wobei die Schellenöffnung mittels einer hier nicht dargestellten Spannschraube verschließbar ist, welche an einem Sicherungsglied verstellbar gehalten ist, das am Schellenkörper gegen die Rückstellkraft einer Federklammer verschwenkt werden kann,
- Fig. 2: einen ersten Befestigungsflansch der Rohrschelle aus Figur 1, welcher dem Sicherungsglied als Auflage dient, und
- Fig. 3: die aus der Spannschraube und dem Sicherungsglied gebildete und im Bereich des ersten Befestigungsflansches verschwenkbar gelagerte Einheit in einer Schwenkposition des Sicherungsgliedes.

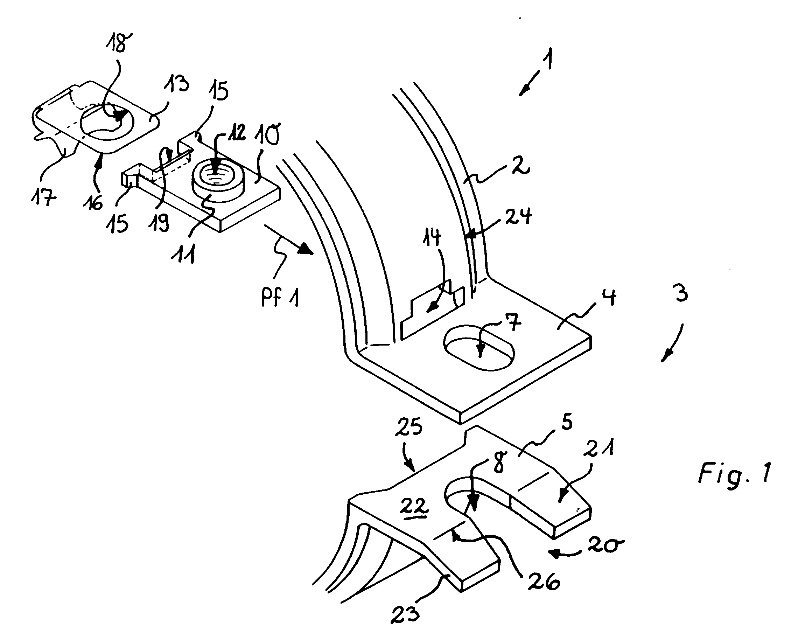

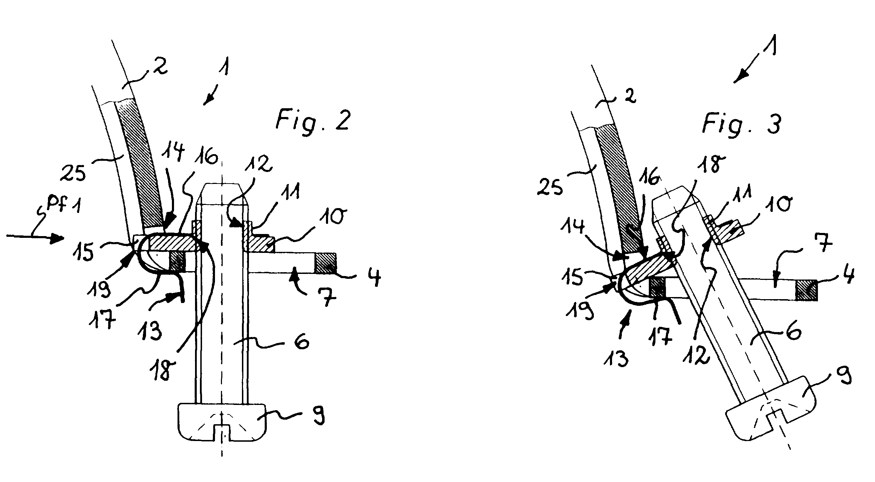

In den Figuren 1 bis 3 ist eine Rohrschelle 1 dargestellt, deren ringförmiger Schellenkörper 2 zumindest eine Schellenöffnung 3 zum Einlegen eines Rohres hat. Die Schellenöffnung 3 ist durch einen ersten und einen zweiten Befestigungsflansch 4, 5 begrenzt, welche etwa radial nach außen vorstehen. Die Schellenöffnung 3 ist mittels einer in den Figuren 2 und 3 dargestellten Spannschraube 6 verschließbar, welche an den Befestigungsflanschen 4, 5 vorgesehene Befestigungsöffnungen 7, 8 durchsetzt.

Die Spannschraube 6 ist mit ihrem dem Schraubenkopf 9 abgewandten freien Endbereich an einem platten- oder laschenförmigen und zumindest im wesentlichen ebenen Sicherungsglied 10 verstellbar gehalten. Dieses Sicherungsglied 10 weist dazu einen Halteansatz 11 auf, der auf der dem Befestigungsflansch abgewandten Seite des Sicherungsgliedes 10 vorsteht und eine zentrale Schraubenöffnung 12 aufweist. Die Schraubenöffnung 12 trägt ein Innengewinde, in welches die Spannschraube 6 mit ihrem Außengewinde eingeschraubt ist.

Wie aus den Figuren 2 und 3 deutlich wird, ist das Sicherungsglied 10 am Schellenkörper 2 im Bereich des ersten Befestigungsflansches 4 um eine etwa parallel zur Schellenlängsachse verlaufende Achse gegen die Rückstellkraft einer Federklammer 13 verschwenkbar gehalten. Das Sicherungsglied 10 ist dazu, von der Innenseite des Schellenkörpers 2 aus, durch eine am Schellenkörper 2 vorgesehene Durchstecköffnung 14 bis zu einer Querschnittserweiterung des Sicherungsgliedes hindurchgeführt. Diese Querschnittserweiterung wird durch zwei Anschlag- und Gelenkzapfen 15 gebildet, die beidseits über die Längsseiten des Sicherungsgliedes 10 vorstehen und quer zur Einführrichtung Pf1 des Sicherungsgliedes orientiert sind. In geschlossenem Zustand und bei eingelegtem Rohr sichern die Anschlag- und Gelenkzapfen 15 das Sicherungsglied 10 gegen ein Herausfallen aus dem Schellenkörper 2.

In den Figuren 1 bis 3 ist dargestellt, daß die Rohrschelle 1 eine doppelarmige und etwa U-förmig umgebogene Federklammer 13 hat. Die Federklammer 13 durchsetzt mit ihrem ersten Federarm 16 die Durchstecköffnung 14 des Schellenkörpers 2 und ist von der Innenseite des Schellenkörpers 2 aus derart auf das Sicherungsglied 10 aufgeschoben, daß sie mit ihrem zweiten Federarm 17 am ersten Befestigungsflansch 4 anliegt und mit ihrem ersten Federarm 16 das Sicherungsglied 10 federnd beaufschlagt.

Das Sicherungsglied 10 ist mittels der Federklammer 13 am Schellenkörper 2 lösbar gehalten. Die das Sicherungsglied 10 und Befestigungsflansch 4 umgreifende Federklammer 13 hat dazu an ihrem vorstehenden ersten Federarm 16 eine Halteöffnung 18, welche den Halteansatz 11 des Sicherungsgliedes 10 formschlüssig umgreift. Da das Sicherungsglied 10 zusätzlich auch durch die Anschlag- und Gelenkzapfen 15 am Schellenkörper 2 gehalten ist, kann die Rohrschelle 1 erforderlichenfalls auch ohne Federklammer 13 eingesetzt werden.

Wie insbesondere aus Figur 1 deutlich wird, hat das Sicherungsglied 10 an seiner dem Schelleninneren zugewandten Schmalseite eine Ausnehmung 19, in der ein benachbarter Teilbereich der Federklammer 13 formangepaßt aufgenommen ist, ohne störend in das Schelleninnere vorzustehen.

Zum Erfassen des Schraubenkopfes 9 oder dergleichen der Spannschraube 6 ist die am zweiten Befestigungsflansch 5 vorgesehene Befestigungsöffnung 8 als Langloch ausgebildet, das auf der der Innenseite des Schellenkörpers 2 abgewandten Schmalseite des Befestigungsflansches 5 randseitig offen ausgebildet ist. Das schlitzförmige Langloch 8 erweitert sich in Richtung zu seiner randseitigen Öffnung 20 zu einem Einführtrichter für den Schraubenschaft der Spannschraube 6. Gleichzeitig ist der freie Endbereich des zweiten Befestigungsflansches 5 in die dem ersten Befestigungsflansch abgewandte Richtung abgewinkelt, wodurch der freie Endbereich des Befestigungsflansches 5 auf seiner dem ersten Befestigungsflansch 4 zugewandten Seite eine Auflaufschräge 21 für den Schraubenkopf 9 bildet, welche in Richtung zur randseitigen Öffnung 20 des Langloches 8 nach außen orientiert ist.

Nach dem Einlegen eines Rohres werden die Befestigungsflansche 4, 5 gegebenenfalls mit nur einer Hand zusammengeführt, so daß die über das Sicherungsglied 10 verschwenkbar gehaltene Spannschraube 6 mit ihrem Schraubenkopf 9 am zweiten Befestigungsflansch 5 auftrifft. Beim weiteren Zusammenführen der Befestigungsflansche 4, 5 wird die aus dem Sicherungsglied 10 sowie der Spannschraube 6 bestehende Einheit gegen die Rückstellkraft der Federklammer 13 in die in Figur 3 dargestellte Schwenkposition bewegt, in welcher der Schraubenkopf 9 auf der Auflaufschräge 21 nach außen gleitet, bis er den stirnseitigen freien Rand des zweiten Befestigungsflansches 5 überwindet und sich der Schraubenschaft im Langloch 8 verfängt.

Durch die auf das Sicherungsglied einwirkende Rückstellkraft der Federklammer 13 wird die im Langloch gefangene Spannschraube 6 nun in Richtung zum Schellenkörper 2 bewegt, bis der der randseitigen Öffnung 20 des Langloches 8 abgewandte Umfangsrand eine weitere Rückschwenkbewegung deutlich hörbar begrenzt. In dieser in Figur 2 angedeuteten Schließstellung liegt das Sicherungsglied 10 auf dem ersten Befestigungsflansch 4 auf, während der zweite Befestigungsflansch 5 als Widerlager für den Schraubenkopf 9 dient. Durch weiteres Eindrehen der Spannschraube 6 in die Schraubenöffnung 12 am Sicherungsglied 10 können die Befestigungsflansche 4, 5 zusätzlich zusammengezogen und der Schellenkörper 2 somit fest um ein Rohr gespannt werden.

Da die Biegekante **26** des abgewinkelten Endbereiches des zweiten Befestigungsflansches 5 etwa mittig durch das Langloch 8 verläuft, liegt der Schraubenkopf 9 sicher auf dem inneren und radial orientierten Teilbereich 22 des Befestigungsflansches 5 auf, während der äußere abgewinkelte Teilbereich 23 die Spannschraube 6 gegen ein unbeabsichtiges Lösen zusätzlich sichert.

Die Rohrschelle 1 läßt sich somit praktisch einhändig in die Vormontagestellung bringen. Gleichzeitig zeichnet sich die Rohrschelle durch eine hohe Belastbarkeit auch im Bereich der mittels der Spannschraube 6 verbundenen Befestigungsflansche 4, 5 aus. Eine störungsfreie Funktion wird durch die sichere Führung der Spannschraube 6 in den Langlöchern 7, 8 sowie die beidseitige Führung des verschwenkbaren Sicherungsgliedes 10 in der dazu zumindest bereichsweise formangepaßten Durchstecköffnung 14 gewährleistet.

Aus einem Vergleich der Figuren 1 einerseits und 2, 3 andererseits wird deutlich, daß der beispielsweise aus einem einstückigen Schellenband oder aus zwei Schellenteilen bestehende Schellenkörper 2 eine nach außen orientierte und um den Schellenkörper 2 umlaufende Sicke 24 aufweist, die auf der Innenseite des Schellenkörpers 2 eine Ausnehmung 25 bildet. In den Figuren 2 und 3 ist dargestellt, daß das Sicherungsglied mit seinen als Schwenklager dienenden Anschlag- und Gelenkzapfen 15 im Bereich dieser Ausnehmung 25 und insbesondere in ihrem Umriß angeordnet ist. Da auch die Federklammer 13 in diesem Bereich innerhalb der Ausnehmung 19 des Sicherungsgliedes 10 angeordnet ist, stehen keine Teile der Rohrschelle 1 in das Schellenkörper-Innere störend vor.

Die hier dargestellte Rohrschelle 1 kann mit einer oder ohne eine gummielastische Schalldämm-Einlage eingesetzt werden. Diese Schalldämm-Einlage ist hier nicht weiter dargestellt. Auch ist es möglich, die Rohrschelle 1 ohne die Federklammer 13 zu verwenden, wenn auf eine auf das Sicherungsglied 10 einwirkende Rückstellkraft verzichtet werden kann. In der hier dargestellten Auführungform ist die Rohrschelle 1 sowie das Sicherungsglied 10 aus einem kaltverformbaren Stahl hergestellt. Demgegenüber kann die Federklammer aus einem federelastischem Material, beispielsweise aus Kunststoff oder vorzugsweise aus Federstahl hergestellt sein und/oder eine zumindest in einem Teilbereich federelastische Formgebung aufweisen. Zur Montage der Rohrschelle 1 wird die Federklammer 13 aufgespreizt und auf das Sicherungsglied 10 aufgeschoben. Dabei schnappt die am ersten Federarm 16 vorgesehene Halteöffnung 18 am Halteansatz 11 des Sicherungsgliedes 10 ein. Die aus der Federklammer 13 sowie dem Sicherungsglied 10 bestehende Einheit kann anschließend von der Innenseite des Schellenkörpers 2 aus durch die Durchstecköffnung 14 auf den ersten Befestigungsflansch 4 aufgeschoben werden. Abschließend wird die Spannschraube 6 durch die Befestigungsöffnung 7 in die Schraubenöffnung 12 des Sicherungsgliedes 10 eingeschraubt, so daß die Spannschraube 6 das Sicherungsglied 10 gegen ein Herausfallen aus der Durchstecköffnung 14 im Schellenkörper 2 sichert. Dabei kann es vorteilhaft sein, wenn die Spannschraube 6 die Federklammer 13 und das Sicherungsglied 10 gegen ein Verrutschen in Richtung zum Schelleninneren sichert und wenn dazu in Schließstellung der Rohrschelle 1 die Spannschraube 6 an dem dem Schelleninneren zugewandten Umfangsrand des Langloches 7 anliegt, um Schallbrücken von der Rohrleitung über die Federklammer oder das Sicherungsglied und den hier nicht dargestellten Befestigungsanker am Schellenkörper der Rohrschelle in das Mauerwerk zu verhindern. Beim Schließen der Rohrschelle 1 und Festziehen der Spannschraube 6 ist das Sicherungsglied 10 am Schellenkörper 2 drehfest gehalten, da das Sicherungsglied 10 an seinem Ende in der Durchstecköffnung 14 angeordnet ist, während auf der gegenüberliegenden Seite des Sicherungsgliedes die Spannschraube 6 ein einseitiges Verschieben des Sicherungsgliedes 10 ausschließt.

## Patentansprüche

1. Rohrschelle (1) mit einem etwa ringförmigen Schellenkörper (2), der zumindest eine, mittels einer Spannschraube (6) verschließbare Schellenöffnung (3) hat, welche durch an gegenüberliegenden Schellenenden nach außen vorstehende und mit dem Schellenkörper (2) im wesentlichen starr verbundene erste und zweite Befestigungsflansche (4, 5) begrenzt ist, wobei die Spannschraube (6) an den Befestigungsflanschen (4, 5) vorgesehene Befestigungsöffnungen (7, 8) durchsetzt und mit ihrem dem Schraubenkopf (9) abgewandten freien Endbereich in einem Sicherungsglied (10) verstellbar gehalten ist, welches Sicherungsglied (10) am Schellenkörper (2) im Bereich des ersten Befestigungsflansches (4) auf seiner dem zweiten Befestigungsflansch (5) abgewandten Seite um eine etwa parallel zur Schellenlängsachse verlaufende Achse gegen eine Rückstellkraft verschwenkbar gehalten ist und wobei der erste festigungsflansch (4) als Auflage für das schwenkbare Sicherungsglied (10) dient, **dadurch gekennzeichnet**, daß die Rohrschelle (1) eine doppelarmige Federklammer (13) aufweist, welche mit einem ersten Federarm (16) eine Durchstecköffnung (14) des Schellenkörpers (2) durchsetzt und die von der Innenseite des Schellenkörpers (2) aus derart das Sicherungsglied (10) und den ersten Befestigungsflansch (4) umgreift, daß sie (13) mit ihrem zweiten Federarm (17) an diesem Befestigungsflansch (4) anliegt und mit ihrem ersten Federarm (16) das Sicherungsglied (10) federnd beaufschlagt.

2. Rohrschelle nach Anspruch 1, dadurch gekennzeichnet, daß am Sicherungsglied (10) vorzugsweise auf seiner dem zweiten Befestigungsflansch (5) abgewandten Seite ein Halteansatz (11) mit Schraubenöffnung (12) vorgesehen ist, in der die Spannschraube (6) verstellbar gehalten ist.

3. Rohrschelle nach Anspruch 1 oder 2, dadurch gekennzeichnet, daß das Sicherungsglied (10) mittels der Federklammer (13) vorzugsweise lösbar am Schellenkörper (2) gehalten ist.

4. Rohrschelle nach einem der Ansprüche 1 bis 3, dadurch gekennzeichnet, daß die Federklammer (13) zumindest an ihrem ersten Federarm (16) eine Halteöffnung (18) hat, welche den Halteansatz (11) des Sicherungsgliedes (10) vorzugsweise formschlüssig umgreift.

5. Rohrschelle nach einem der Ansprüche 1 bis 4, dadurch gekennzeichnet, daß am Sicherungsglied (10) ein Innengewinde oder dergleichen Gewindeprofilierung vorgesehen ist, in welchem die Spannschraube (6) verstellbar gehalten ist und daß die Gewindeprofilierung vorzugsweise in der Schraubenöffnung (12) am Halteansatz (11) vorgesehen ist.

6. Rohrschelle nach einem der Ansprüche 1 bis 5, dadurch gekennzeichnet, daß das Sicherungsglied (10) von der Innenseite des Schellenkörpers (2) aus bis zu einer Querschnittserweiterung des Sicherungsgliedes (10) in die Durchstecköffnung (14) einführbar ist.

7. Rohrschelle nach Anspruch 6, dadurch gekennzeichnet, daß an den beiden Längsseiten des Sicherungsgliedes (10) jeweils ein quer zur Einführrichtung (Pf1) des Sicherungsgliedes (10) vorstehender Anschlag- und Gelenkzapfen (15) als Querschnittserweiterung vorgesehen ist.

8. Rohrschelle nach einem der Ansprüche 1 bis 7, dadurch gekennzeichnet, daß das Sicherungsglied (10) an seiner dem Schelleninneren zugewandten Schmalseite eine Ausnehmung (19) zur vorzugsweise formangepaßten Aufnahme eines benachbarten Teilbereiches der Federklammer (13) hat.

9. Rohrschelle nach einem der Ansprüche 1 bis 8, dadurch gekennzeichnet, daß die Befestigungsöffnung (7, 8) des ersten und/oder des zweiten Befestigungsflansches (4, 5) als Langloch ausgebildet ist, welches in etwa radialer Richtung des Schellenkörpers (2) orientiert ist.

10. Rohrschelle nach einem der Ansprüche 1 bis 9, dadurch gekennzeichnet, daß die als Langloch ausgebildete Befestigungsöffnung (8) des zweiten Befestigungsflansches (5) zum Erfassen der Spannschraube (6) auf der der Innenseite des Schellenkörpers (2) abgewandten Schmalseite des Befestigungsflansches (5) randseitig offen ausgebildet ist.

11. Rohrschelle nach Anspruch 10, dadurch gekennzeichnet, daß der freie Endbereich des zweiten Befestigungsflansches (5) auf seiner dem ersten Befestigungsflansch (4) zugewandten Seite eine in Richtung zur randseitigen Öffnung (20) des Langloches (8) nach außen orientierte Auflaufschräge (21) für den Schraubenkopf (9) aufweist.

12. Rohrschelle nach einem der Ansprüche 10 bis 11, dadurch gekennzeichnet, daß der freie Endbereich des zweiten Befestigungsflansches (5) in die dem ersten Befestigungsflansch (4) abgewandte Richtung abgewinkelt ist und daß die Biegekante (26) dieses abgewinkelten Endbereiches vorzugsweise etwa mittig durch das Langloch (8) verläuft.

13. Rohrschelle nach einem der Ansprüche 10 bis 12, dadurch gekennzeichnet, daß das am zweiten Befestigungsflansch (5) vorgesehene Langloch (8) sich in Richtung zu seiner randseitigen Öffnung (20) zu einem Einführtrichter für den Schraubenschaft erweitert.

14. Rohrschelle nach einem der Ansprüche 1 bis 13, dadurch gekennzeichnet, daß die Federklammer (13) aus Federstahl oder Kunststoff hergestellt ist und/oder eine zumindest in einem Teilbereich federelastische Formgebung aufweist.

15. Rohrschelle nach einem der Ansprüche 1 bis 14, dadurch gekennzeichnet, daß das Sicherungsglied (10) in der zumindest bereichsweise formangepaßten Durchstecköffnung (14) verschwenkbar geführt ist.

16. Rohrschelle nach einem der Ansprüche 10 bis 13, dadurch gekennzeichnet, daß der der randseitigen Öffnung (20) abgewandte Umfangsrand des Langloches (8) die Rückschwenkbewegung der mit dem Sicherungsglied (10) verschwenkbaren Spannschraube (6) begrenzt.

17. Rohrschelle nach einem der Ansprüche 1 bis 16, dadurch gekennzeichnet, daß an der Schellenkörper-Innenseite eine vorzugsweise durch eine insbesondere umlaufende Sicke (24) gebildete Ausnehmung (25) vorgesehen ist und daß das Sicherungsglied (10) mit seinen Anschlag- und Gelenkzapfen (15) sowie gegebenenfalls der benachbarte Teilbereich der Federklammer (13) im Bereich dieser Ausnehmung (25) angeordnet ist.

18. Rohrschelle nach einem der Ansprüche 1 bis 17, dadurch gekennzeichnet, daß die Spannschraube (6) die Federklammer (13) und/oder das Sicherungsglied (10) gegen ein Verrutschen in Richtung zum Schelleninneren sichert und daß die Spannschraube (6) dazu in Schließstellung der Rohrschelle (1) vorzugsweise an dem dem Schelleninneren zugewandten Umfangsrand der am ersten Befestigungsflansch (4) vorgesehenen Befestigungsöffnung (7) anliegt.

## Claims

1. Pipe clip (1) having a substantially annular clip member (2) which has at least one clip opening (3) closable by means of a tensioning screw (6), the opening (3) being defined by first and second fixing flanges (4, 5) projecting outwards on opposite ends of the clip and substantially rigidly attached to the clip member (2), the tensioning screw (6) passing through fixing apertures (7, 8) provided on the fixing flanges (4, 5) and being adjustably held in a securing member (10) with its free end portion remote from the screw head (9), the securing member (10) being held on the clip member (2) in the region of the first fixing flange (4) on its side remote from the second fixing flange (5) so as to be pivotable, counter to a restoring force, about an axis running parallel to the longitudinal axis of the clip, the first fixing flange (4) serving as a support for the pivotable securing member (10), **characterised in that** the pipe clip (1) has a double-armed clamping spring (13) which has a first spring arm (16) passing through an aperture (14) in the clamp member (2) and which engages around the securing member (10) and the first fixing flange (4), from the inside of the clip member (2), in such a way that it (13) abuts with its second spring arm (17) on this fixing flange (4) and resiliently acts on the securing member (10) with its first spring arm (16).

2. Pipe clip according to claim 1, characterised in that, on the securing member (10), preferably on its side remote from the second fixing flange (5), is provided a retaining projection (11) having a screw opening (12) in which the tensioning screw (6) is adjustably held.

3. Pipe clip according to claim 1 or 2, characterised in that the securing member (10) is held, preferably releasably, on the clip member (2) by means of the clamping spring (13).

4. Pipe clip according to one of claims 1 to 3, characterised in that the clamping spring (13) has, at least on its first spring arm (16), a retaining aperture (18) which fits round the retaining projection (11) of the securing member (10), preferably with interlocking engagement.

5. Pipe clip according to one of claims 1 to 4, characterised in that on the securing member (10) is provided an internal thread or similar threaded profile in which the tensioning screw (6) is adjustably held and in that the threaded profile is preferably provided in the screw aperture (12) on the retaining lug (11).

6. Pipe clip according to one of claims 1 to 5, characterised in that the securing member (10) can be inserted from inside the clip member (2) into the insertion opening (14) as far as a cross sectional widening of the securing member (10).

7. Pipe clip according to claim 6, characterised in that on both longitudinal sides of the securing member (10) there is an abutting and articulating pin (15) forming the cross sectional widening projecting transversely to the direction of insertion (Pfl) of the securing member (10).

8. Pipe clip according to one of claims 1 to 7, characterised in that the securing member (10) has, on its narrow end facing the inside of the clip, a recess (19), preferably suitably shaped, for accommodating an adjacent part of the clamping spring (13).

9. Pipe clip according to one of claims 1 to 8, characterised in that the fixing aperture (7, 8) in the first and/or second fixing flange (4, 5) is formed as an oblong hole which is oriented substantially in the radial direction of the clip member (2).

10. Pipe clip according to one of claims 1 to 9, characterised in that the fixing aperture (8) in the second fixing flange (5), in the form of an oblong hole, is designed to be open at the edge in order to accommodate the tensioning screw (6) on the narrow end of the fixing flange (5) remote from the inside of the pipe clip (2).

11. Pipe clip according to claim 10, characterised in that the free end region of the second fixing flange (5) has, on its side facing the first fixing flange (4), an approach gradient (21) for the screw head (9) oriented outwardly towards the edge opening (20) of the oblong hole (8).

12. Pipe clip according to claim 10 to 11, characterised in that the free end region of the second fixing flange (5) is bent in the direction facing away from the first fixing flange (4) and in that the bending edge (26) of this bent end region preferably extends more or less centrally through the oblong hole (8).

13. Pipe clip according to claim 10 to 12, characterised in that the oblong hole (8) provided on the second fixing flange (5) widens out towards its edge opening (20) to form an entry funnel for the screw shank.

14. Pipe clip according to one of claims 1 to 13, characterised in that the clamping spring (13) is made of spring steel or plastics and/or has a springily elastic shape at least in a partial zone.

15. Pipe clip according to one of claims 1 to 14, characterised in that the securing member (10) is pivotally guided in the insertion opening (14) which is suitably shaped at least in parts.

16. Pipe clip according to one of claims 10 to 13, characterised in that the circumferential edge of the oblong hole (8) remote from the edge opening (20) limits the backward pivoting movement of the tensioning screw (6) which is pivotable with the securing member (10).

17. Pipe clip according to one of claims 1 to 16, characterised in that on the inside of the clip member is provided a recess (25) preferably formed by a bead (24), particularly an encircling bead, and in that the securing member (10) is arranged with its abutting and articulating pin (15) and optionally the adjacent part of the clamping spring (13) in the region of this recess (25).

18. Pipe clip according to one of claims 1 to 17, characterised in that the tensioning screw (6) secures the clamping spring (13) and/or the securing member (10) to prevent them slipping towards the inside of the clip and in that for this purpose, in the closed position of the pipe clip (1), the tensioning screw (6) preferably abuts on the circumferential edge, facing the interior of the clip, of the fixing aperture (7) provided on the first fixing flange (4).

## Revendications

1. Collier de serrage (1) avec un corps de collier approximativement circulaire (2), qui comporte au moins une ouverture de collier (3) pouvant être fermée par l'intermédiaire d'une vis de serrage (6) et qui est limitée par l'intermédiaire d'une première et d'une seconde brides de fixation (4, 5) reliées de façon essentiellement rigide au corps du collier (2) et faisant saillie vers l'extérieur au niveau des extrémités opposées du collier, la vis de serrage (6) traversant ce faisant des ouvertures de fixation (7, 8) prévues sur les brides de fixation (4, 5) et étant maintenue de façon ajustable avec sa zone d'extrémité libre opposée à la tête de la vis (9) dans un élément de blocage (10), lequel élément de blocage (10) étant sécurisé de façon pivotante contre une force de rappel sur le corps du collier (2) dans la zone de la première bride de fixation (4) sur son côté opposé à la seconde bride de fixation (5) autour d'un axe s'étendant à peu près parallèlement à l'axe longitudinal du collier, et la première bride de fixation (4) faisant office de base pour l'élément de blocage pivotant (10), caractérisé en ce que le collier de serrage (1) comporte une bride de ressort à deux bras (13), qui, avec un premier bras élastique (16), traverse une ouverture traversante (14) du corps du collier (2) et qui entoure l'élément de blocage (10) et la première bride de fixation (4) depuis le côté intérieur du corps du collier (2) de telle sorte que la bride de ressort (13) repose avec son second bras élastique (17) contre cette bride de fixation (4) et, avec son premier bras élastique (16), met sous contrainte de ressort l'élément de blocage (10).

2. Collier de serrage selon la revendication 1, caractérisé en ce qu'il est prévu sur l'élément de blocage (10), de préférence sur son côté opposé à la seconde bride de fixation (5), un bord de maintien (11) doté d'une ouverture pour vis (12) dans laquelle la vis de serrage (6) est maintenue de façon ajustable.

3. Collier de serrage selon la revendication 1 ou 2, caractérisé en ce que l'élément de blocage (10) est maintenu sur le corps du collier (2) par l'intermédiaire de la bride de ressort (13), de préférence de façon amovible.

4. Collier de serrage selon l'une des revendications 1 à 3, caractérisé en ce que la bride de ressort (13) comporte, au moins sur son premier bras élastique (16), une ouverture de retenue (18), qui entoure le bord de maintien (11) de l'élément de blocage (10) de préférence par engagement positif.

5. Collier de serrage selon l'une des revendications 1 à 4, caractérisé en ce qu'il est prévu sur l'élément de blocage (10) un filet de vis intérieur ou un profil de filetage équivalent, dans lequel la vis de serrage (6) est maintenue de façon ajustable, et en ce que le profil de filetage est de préférence prévu dans l'ouverture pour vis (12) sur le bord de maintien (11).

6. Collier de serrage selon l'une des revendications 1 à 5, caractérisé en ce que l'élément de blocage (10) peut être introduit dans l'ouverture traversante (14), depuis le côté intérieur du corps du collier (2) jusque dans une extension de la section transversale de l'élément de blocage (10).

7. Collier de serrage selon la revendication 6, caractérisé en ce qu'il est prévu sur les deux côtés longitudinaux de l'élément de blocage (10) respectivement un boulon de butée et d'articulation (15) débordant transversalement au sens d'introduction (Pf1) de l'élément de blocage (10) en tant qu'extension de la section transversale.

8. Collier de serrage selon l'une des revendications 1 à 7, caractérisé en ce que l'élément de blocage (10) comporte, sur sa tranche orientée vers l'intérieur du collier, un creux (19) destiné à accueillir une zone partielle adjacente de la bride de ressort (13) de préférence par adéquation de forme.

9. Collier de serrage selon l'une des revendications 1 à 8, caractérisé en ce que l'ouverture de fixation (7, 8) de la première et/ou de la seconde bride de fixation (4, 5) est conçue sous la forme d'un trou oblong, qui est orienté dans la direction approximativement radiale du corps du collier (2).

10. Collier de serrage selon l'une des revendications 1 à 9, caractérisé en ce que l'ouverture de fixation conçue sous la forme d'un trou oblong (8) de la seconde bride de fixation (5) est conçue de façon ouverte au niveau de son bord périphérique pour recevoir la vis de serrage (6) sur la tranche de la bride de fixation (5) opposée au coté intérieur du corps du collier (2).

11. Collier de serrage selon la revendication 10, caractérisé en ce que la zone d'extrémité libre de la seconde bride de fixation (5) comporte, sur son côté orienté vers la première bride de fixation (4), un biais d'insertion (21) pour la tête de la vis (9), orienté vers l'extérieur en direction de l'ouverture de bord (20) du trou oblong (8).

12. Collier de serrage selon l'une des revendications 10 ou 11, caractérisé en ce que la zone d'extrémité libre de la seconde bride de fixation (5) est pliée dans la direction opposée à la première bride de fixation (4), et en ce que le bord plié (26) de cette zone d'extrémité pliée passe de préférence approximativement au milieu du trou oblong (8).

13. Collier de serrage selon l'une des revendications 10 à 12, caractérisé en ce que le trou oblong (8) prévu sur la seconde bride de fixation (5) se prolonge dans la direction d'une ouverture de bord (20) jusqu'à un cône d'insertion pour le corps de la vis.

14. Collier de serrage selon l'une des revendications 1 à 13, caractérisé en ce que la bride de ressort (13) est en acier pour ressort ou en plastique et/ou présente une configuration à déformation élastique au moins dans une zone partielle.

15. Collier de serrage selon l'une des revendications 1 à 14, caractérisé en ce que l'élément de blocage (10) est introduit de façon pivotante dans l'ouverture traversante (14) de forme adaptée au moins par zones.

16. Collier de serrage selon l'une des revendications 10 à 13, caractérisé en ce que le bord périphérique du trou oblong (8) opposé à l'ouverture de bord (20) limite le mouvement de retour pivotant de la vis de serrage (6) pouvant être pivotée avec l'élément de blocage (10).

17. Collier de serrage selon l'une des revendications 1 à 16, caractérisé en ce qu'il est prévu un creux (25) formé sur le côté intérieur du corps du collier, formé de préférence par une moulure qui en particulier en fait le tour (24), et en ce que l'élément de blocage (10) avec ses boulons de butée et d'articulation (15) est disposé, comme éventuellement la zone partielle adjacente de la bride de ressort (13), dans la zone de ce creux (25).

18. Collier de serrage selon l'une des revendications 1 à 17, caractérisé en ce que la vis de serrage (6) sécurise la bride de ressort (13) et/ou l'élément de blocage (10) contre un glissement dans la direction de l'intérieur du collier, et en ce que la vis de serrage (6) s'appuie ce faisant, en position de fermeture du collier de serrage (1), de préférence contre le bord périphérique orienté vers l'intérieur du collier de l'ouverture de fixation (7) prévue sur la première bride de fixation (4).
